# EUROPÄISCHE PATENTSCHRIFT

(11) **EP 3 757 435 B1**
(45) Veröffentlichungstag und Bekanntmachung des Hinweises auf die Patenterteilung: **23.10.2024**
(21) Anmeldenummer: 20175133.6
(22) Anmeldetag: 18.05.2020
(51) Int. Cl.: F16L 3/10, B60R 16/02, H02G 3/32

(54) **HALTERUNG FÜR LANGGESTRECKTE GEGENSTÄNDE**
SUPPORT FOR ELONGATED OBJECTS
SUPPORT POUR OBJETS ALLONGÉS

(30) Priorität: 26.06.2019 DE 102019117213
(43) Veröffentlichungstag der Anmeldung: 30.12.2020
(73) Patentinhaber: Illinois Tool Works Inc., Glenview, IL 60025 (US)
(72) Erfinder: Pfeiffer, Christian, Glenview, IL 60025 (US)
(74) Vertreter: HGF

(56) Entgegenhaltungen:
- WO-A1-2006/094609
- CN-A- 101 435 519
- CN-A- 102 510 030
- CN-A- 106 641 455
- DE-A1- 102004 063 364
- DE-A1- 3 637 738
- DE-B4- 3 642 958
- FR-A1- 2 960 618
- GB-A- 2 272 954

## Beschreibung

Die Erfindung betrifft eine Halterung für langgestreckte Gegenstände, wie Rohrleitungen, Kabel und dergleichen.

Es ist bekannt, Rohrleitungen, Kabel und dergleichen mit entsprechenden Halterungen sowohl in Gebäuden als auch in Kraftfahrzeugen, Luftfahrzeugen und dergleichen an Decken oder Wandungen festzulegen, um eine Kabel- oder Leitungsführung sicherzustellen. Hierbei sind auch Halterungen bekannt, die über einen Clip in einer Karosserieöffnung angeordnet werden und in die anschließend eine Leitung, Kabelstrang oder dergleichen eingelegt werden kann und welche dann manuell verschlossen werden und beispielsweise durch eine Verrastung im geschlossenen Zustand gehalten werden, so dass die Leitung, das Kabel oder dergleichen zuverlässig gehalten wird.

Darüber hinaus sind auch Halterungen für langgestreckte Gegenstände bekannt, die beim Einlegen des langgestreckten Gegenstandes mit dem Einlegevorgang geschlossen werden und bei denen die Schließung mit der Montage des Kabels oder der Leitung erfolgt.

Aus der US 4,591,285 A ist eine Halterung für Kabel oder Leitungen bekannt, bei der das Kabel oder die Leitungen in einer Aufnahmewanne eingelegt wird und beim Hineindrücken des Kabels oder Leitung die Wanne so verschwenkt, dass ein mit einem Rastelement versehenes freies Ende der Wanne mit einem freien Ende einer gegenüberliegenden Wandung der Halterung verrastend in Eingriff kommt.

Aus der US 5,535,969 A ist eine Haltevorrichtung für zwei voneinander separierte Leitung bekannt, bei der die Leitungen durch ein Schwert getrennt sind und an einem Schwenkarm ein weiteres, mit dem ersten Schwert interagierendes Schwert vorhanden ist, welche die Leitungen auseinanderdrücken, wobei zudem an dem Schwenkarm eine Rasteinrichtung derart angeordnet ist, dass die Leitungen allseitig von der Halterung begrenzt werden, wobei flexible Haltearme vorhanden sind, welche eine Lateralbewegung der Leitungen begrenzt.

Aus der US 5,772,758 A ist eine Haltevorrichtung bekannt, welche eine Leitung oder ein Kabel unter Pressung halten kann, wobei diese Einrichtung manuell geschlossen wird, indem zwei Sägezahnprofile eineinandergeschoben werden und miteinander verrasten, wobei durch elastische Rückstellkräfte der entsprechenden Arme, an den die Sägezahnprofile ausgebildet sind, eine Sicherung der Verriegelung erfolgen soll.

Aus der US 9,109,617 B2 ist eine weitere mögliche Ausführungsform einer automatisch schließenden Halterung bekannt, bei der eine Leitung, ein Kabel oder dergleichen in eine auf dem Durchmesser des Kabels oder der Leitung abgestimmten Wanne eingelegt wird, welche dann ebenfalls beim Zudrücken der Leitung oder des Kabels in den Körper der Halterung um ein Filmscharnier verschwenkt wird und wobei eine Rasteinrichtung an der Wanne mit einer Rasteinrichtung der gegenüberliegenden Wandung der Halterung verrastet.

In der CN 101435519 B ist eine Leitungshaltervorrichtung offenbart, die einen Aufnahmebereich zum Aufnehmen von zwei Leitungen aufweist. Der Aufnahmebereich wird durch einen flexiblen Haltearm begrenzt, wobei freie Enden des Haltearms über entsprechende Rastmittel miteinander verbindbar sind, um die Leitungen mit zu fixieren. Um die Leitungshaltervorrichtung auf Leitungen unterschiedlicher Durchmesser anzupassen sind im Aufnahmeraum der Leitungshaltervorrichtung lamellenartige Strukturen vorgesehen.

Aus der CN 106641455 A geht ebenfalls eine Leitungshaltervorrichtung hervor. Diese Leitungshaltervorrichtung umfasst einen in etwa kreisringförmigen flexiblen Haltearm, der einen Aufnahmeraum zum Aufnehmen einer Leitung begrenzt, wobei freie Enden des Haltearms über entsprechende Rastmittel miteinander verbindbar sind. Um die Leitungshaltervorrichtung auf verschiedene Leitungsdurchmesser anzupassen, ist in einem entsprechenden Aufnahmeraum zum Aufnehmen von Leitungen innerhalb des Haltearms eine lamellenartige Struktur angeordnet.

In der CN 102510030 B ist auch eine Leitungshaltervorrichtung beschrieben. Diese Leitungshaltervorrichtung umfasst einen in etwa kreisringförmigen flexiblen Haltearm, in den eine Leitung einbringbar und fixierbar ist. Weiterhin ist in einem entsprechenden Aufnahmeraum der Leitungshaltervorrichtung, in dem eine Leitung anordbar ist, ein flexibler Arm zum Beaufschlagen einer aufzunehmenden Leitung mit einer vorbestimmten Kraft vorgesehen. Die freien Enden des Haltearms sind über Rastmittel miteinander verbindbar.

Aus der GB 2 272 954 A geht eine Leitungshaltervorrichtung hervor. Diese Leitungshaltervorrichtung umfasst einen in etwa u-förmigen Basiskörper, an dem ein Haltearm zum Fixieren einer Leitung vorgesehen ist. Weiterhin ist ein Einsatzarm mit dem Haltearm gelenkig verbunden, um einen Aufnahmeraum zum Aufnehmen einer Leitung zu begrenzen. Am Haltearm ist zudem ein federartiger Arm angelenkt, um eine in der Leitungshaltervorrichtung aufgenommene Leitung mit einer Kraft in Richtung des Basisteils zu beaufschlagen. Bei dieser Vorrichtung müssen sowohl der Einsatzarm über Rastmittel mit dem Basisteil als auch der Haltearm über Rastmittel mit dem Basisteil verbunden werden.

In der WO 2006/094609 A1 ist eine Leitungshaltervorrichtung offenbart. Diese Leitungshaltervorrichtung umfasst zwei bewegliche Haltearme, die in einem zentralen Bereich gelenkig derart miteinander verbunden sind, dass beim Einführen einer entsprechenden Leitung die gelenkige Verbindung der Haltearme mit einer Kraft beaufschlagt wird, sodass die die beiden Armen aufeinander zu bewegbar sind. Weiterhin sind Elemente vorgesehen, um eine in der Leitungshaltervorrichtung angeordnete Leitung zentral im Aufnahmeraum zwischen den beiden beweglichen Haltearmen anzuordnen.

In der DE3637738A1 ist ein Halteelement zur Halterung mindestens eines Rohres oder Kabels offenbart. Das Halteelement umfasst ein an einem Träger befestigbaren Lagerbereich und ein Haltebereich mit zwei einander gegenüberliegenden im unteren Bereich miteinander verbunden Schalenteilen, welche beidseits des unteren Bereichs mit einem federnden Zwischenstück verbunden sind, dass in den Lagerbereich übergeht. Die Schalenteile weißen innen mindestens einen federnden Steg auf, wobei die Schalenteile im oberen Bereich über Eingriffselemente miteinander verbinden sind.

Aufgabe der Erfindung ist es, eine Halterung für Leitungen, Kabel oder dergleichen zu schaffen, die bei einem vergleichbaren einfachen Aufbau und damit einer vergleichbar einfachen Herstellung zuverlässig Kabel, Leitungen oder dergleichen auch mit unterschiedlichen Durchmessern zuverlässig festlegt.

Die Aufgabe wird mit einer Halterung mit den Merkmalen des Anspruchs 1 gelöst.

Vorteilhafte Weiterbildungen sind in den Unteransprüchen gekennzeichnet.

Erfindungsgemäß ist eine Halterung für langgestreckte Gegenstände wie eine Leitung, ein Kabel oder dergleichen so ausgebildet, dass bei einer hohen Rückstellkraft eine sichere automatische Verriegelung beim Einlegen eines langgestreckten Körpers erzielt wird, wobei zudem die Halterung erfindungsgemäß so ausgestaltet ist, dass Kabel, Leitungen oder andere langgestreckte Gegenstände auch mit unterschiedlichen Durchmessern eingelegt werden können, so dass die Halterung universell für die unterschiedlichsten Durchmesser geeignet ist, wobei die Kabel, Leitungen oder dergleichen in der Halterung zuverlässig und unter Spannung derart gehalten werden, dass es nicht zu unerwünschten Eigenbewegungen, Klappern und dergleichen kommt und zudem die langgestreckten Gegenstände immer zentriert gehalten werden. Insbesondere kann eine verbesserte Eigengeräuschdämpfung erzielt werden, was insbesondere bei der Elektromobilität wichtig ist.

Erfindungsgemäß besitzt die Halterung ein über ein Filmscharnier schwenkbares Verschlussteil, auf welches der langgestreckte Körper aufgelegt und in die Halterung hineingedrückt wird.

Hierbei verschwenkt das Verschlussteil derart, dass es in eine verrastende Verbindung mit einem ihrem Drehpunkt des Scharniers gegenüberliegenden Wandung kommt und dort mit einem Gegenrastmittel verrastet. In dieser Stellung steht von dem Verschlussteil einerseits und vom Boden der Halterung andererseits je eine elastische Leiste derart in Richtung der die Halterung nach oben abschließenden Wandung der Wanne vor, dass Kabel mit unterschiedlichem Durchmesser durch diese federnden Lippen, an die das Kabel abdeckende Wandung der Wandung angedrückt werden und dadurch einerseits die Rastverbindung sichern und andererseits zentriert festgelegt werden.

Somit betrifft die Erfindung eine Halterung für langgestreckte Körper wie Leitungen, Kabel und dergleichen, wobei ein wannenartiger Grundkörper mit einer nicht beweglichen Basiswandung und zwei daran von abgehenden nicht beweglichen Seitenwandungen vorhanden ist, wobei an einer ersten Seitenwandung ein schwenkbares Verschlussteil angelenkt ist und an der zweiten Seitenwandung ein Verriegelungsteil angeordnet ist, wobei das schwenkbare Verschlussteil und das Verriegelungsteil korrespondierende Rastmittel besitzen, welche durch Verschwenken des Verschlussteils in Eingriff bringbar sind, wobei zur verschwenkenden Betätigung des Verschlussteils eine als Schwenkhebel dienende Wandung vorhanden ist, welche beim Auflegen und Eindrücken eine zu haltenden Gegenstandes das Rastmittel des Verschlussteils zum Rastmittel des Verriegelungsteils verschwenkt und mit diesem in Eingriff bringt, wobei zumindest eine federnde Leiste vorhanden ist, welche sich von dem Grundkörper und/oder der Wandung im verschlossenen Zustand in Richtung zum haltenden Gegenstand erstreckt, wobei die nicht beweglichen Teile der Halterung und zwar die nicht bewegliche Basiswandung, die nicht bewegliche erste Seitenwandung und die nicht bewegliche zweite Seitenwandung einschließlich dem daran angeordneten Verriegelungsteil zum Aussteifung über eine gemeinsame Versteifungsrippe verfügen, die außenseitig und orthogonal auf der Ebene der jeweiligen Wandung stehend sich nach außen erstreckt und somit für eine Aussteifung sorgt.

Ferner kann es vorteilhaft sein, wenn sich zumindest eine federnde Leiste von der nicht beweglichen Basiswandung oder der nicht beweglichen zweiten Seitenwand in verschlossenem Zustand in Richtung zum zu haltenden Gegenstand erstreckt.

Es ist darüber hinaus möglich, dass zwei federnde Leisten vorhanden sind, welche mit ihren Endbereichen divergieren um einen zu haltenden Körper an unterschiedlichen Bereichen mit einer elastischen Rückstellkraft zu beaufschlagen oder eine federnde Leiste vorhanden ist, welche sich mit zwei federnden voneinander divergierenden Endbereichen zu einem zu haltenden Körper erstreckt.

Vorteilhaft ist es insbesondere, dass das Verschlussteil, die als Schwenkhebel dienende als eben ausgebildete Wandung besitzt und bezogen auf das Scharnier um das die Verschwenkung erfolgt gegenüberliegend eine Halbkreisförmig gewölbte Bodenwandung vorhanden ist, an deren freien Ende das Rastmittel ausgebildet ist, sodass im geschlossenen Zustand die gewölbte Bogenwandung die Halterung gegenüber der nicht beweglichen Basiswandung abschließt.

Weiter ist es erfindungsgemäß möglich, dass an der nicht beweglichen Seitenwandung benachbart zur gewölbten Bogenwandung ein freies Ende der Wandung als Anschlag ausgebildet ist, der ein Verbiegen oder Verschwenken des Verschlussteils nach Außen begrenzt.

Vorteilhafter Weise kann eine federnde Leiste an der ebenen Wandung angeordnet sein, wobei sich die federnde Leiste von einer dem als Filmscharnier ausgebildeten Scharnier gegenüberliegenden Längskante der Wandung zurückgebogen entlang der Wandung erstreckt, wobei ein freies Ende der federnden Leiste zur Wandung hin konvergiert.

Bei einer vorteilhaften Ausführungsform ist das Verriegelungsteil von außen schräg auf das Verschlussteil zu ragend angeordnet und besitzt eine freie obere Kante, wobei von der Kante entfernt an einer Innenfläche des Verriegelungsteils eine Rastnut angeordnet ist, welche eine Raststufe ausbildet.

Bei einer weiteren vorteilhaften Ausführungsform ist an der Außenseite der Bogenwandung des Verschlussteils im Endbereich ein nach Außen weisender Rasthaken ausgebildet, wobei der Rasthaken eine freie Rastkante ausbildet, die einem freien Ende der Bogenwandung gegenüberliegend angeordnet ist, wobei der Rasthaken eine freie Rastkante ausbildet, die einem freien Ende der Bogenwandung gegenüberliegend angeordnet ist, wobei der Rasthaken und dessen freie Kante einerseits und die Nut und die daraus gebildete Raststufe andererseits die korrespondierenden Rastmittel des Verschlussteils und das Verriegelungsteils ausbilden.

Vorteilhafter Weise können der Rasthaken von seiner Rastkante aus und die Raststufe mit einem korrespondierenden Hinterschnitt derart ausgebildet sein, dass die Hinterschnitte bei der Verrastung ineinandergreifen.

Vorteilhafter Weise bildet das Verriegelungsteil zwischen der Raststufe und der freien Kante eine Gleit- und Findungsfläche für das aufnehmen und führen einer Außenfläche des Rasthakens des Verschlussteils.

Es ist ferner von Vorteil, wenn die Gleit- und Findungsfläche so verläuft bzw. derart angeordnet ist, dass beim Verschwenken des Verschlussteils eine Außenfläche des Rasthakens an der Findungsfläche entlang gleitet, wobei die Findungsfläche einen gewölbten Verlauf derart besitzt, dass das Verschlussteil bzw. die Bogenwandung elastisch gestaucht wird und nach dem Überstreichen der freien Kante der Raststufe in die Nut elastisch hineinfedert, und/oder sich das Verriegelungselement elastisch nach außen bewegt, was den gleichen Effekt bewirkt. Dies insbesondere auch, wenn sehr große Leistungsquerschnitte eingelegt werden, sodass die Bogenwandung nicht nachgeben kann.

In einer Weiterbildung kann an einer der Bogenwandung gegenüberliegenden Fläche der ebenen Wandung des Verschlussteils eine Anschlagleiste vorhanden sein, welche die Verschwenkung des Verschlussteils in den wannenartigen Grundkörper begrenzt.

In einer Weiterbildung ist an der Innenfläche der ersten Seitenwandung beabstandet zur nicht beweglichen Basiswandung eine sich parallel zur nicht beweglichen Basiswandung erstreckende und von dieser beabstandete Scharnierpodestleiste angeordnet, wobei auf der Scharnierpodestleiste beabstandet zur nicht beweglichen Seitenwandung auf einer der nicht beweglichen Basiswandung gegenüberliegenden Wandung das sich im Wesentlichen in gleicher Richtung wie die nicht bewegliche Seitenwandung erstreckendes Filmscharnier zur gelenkigen Anordnung des Verschlussteils angeordnet ist.

Schließlich kann an der Halterung ein Verbindungsmittel zum Verbinden mit einer Gebäudewandung, einer Gebäudedecke, einer Karosseriewandung oder anderen festen Einrichtungen eines Fahrzeuges, Luftfahrzeuges oder Gebäudes angeordnet sein.

Die Erfindung wird anhand einer Zeichnung beispielhaft erläutert. Es zeigen dabei:

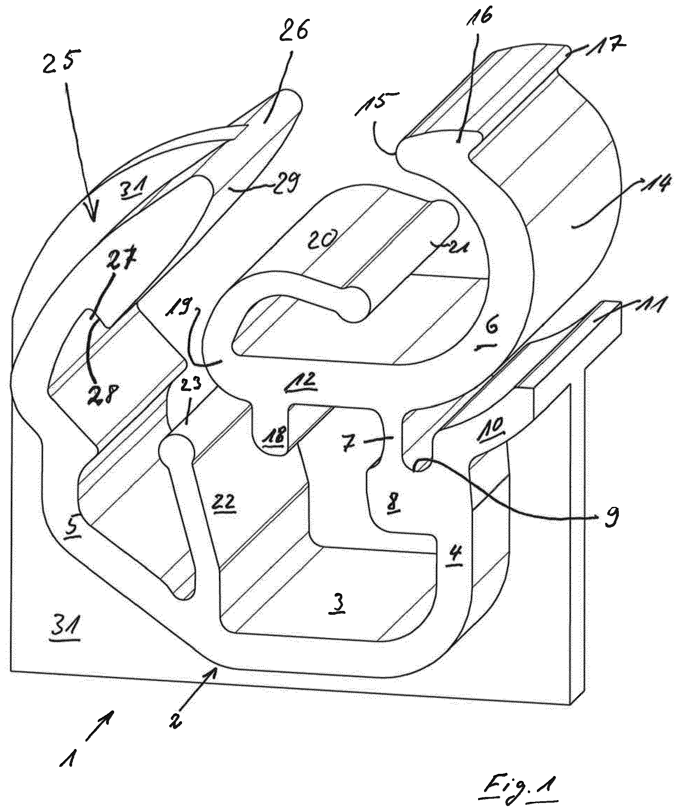

- Figur 1: eine Ausführungsform der erfindungsgemäßen Halterung in einer perspektivischen Ansicht;

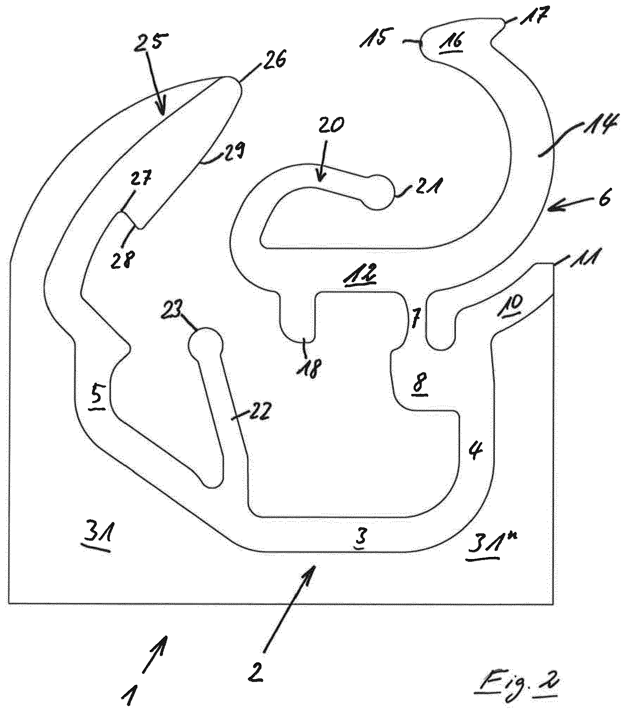

- Figur 2: die Halterung nach Figur 1 in einer Seitenansicht;

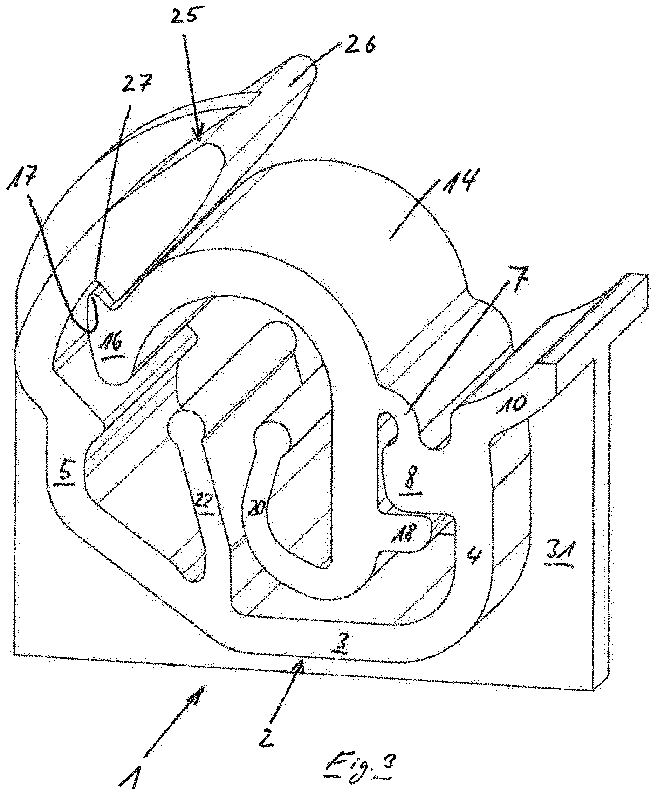

- Figur 3: die Halterung nach Figur 1 in geschlossenem und verriegeltem Zustand;

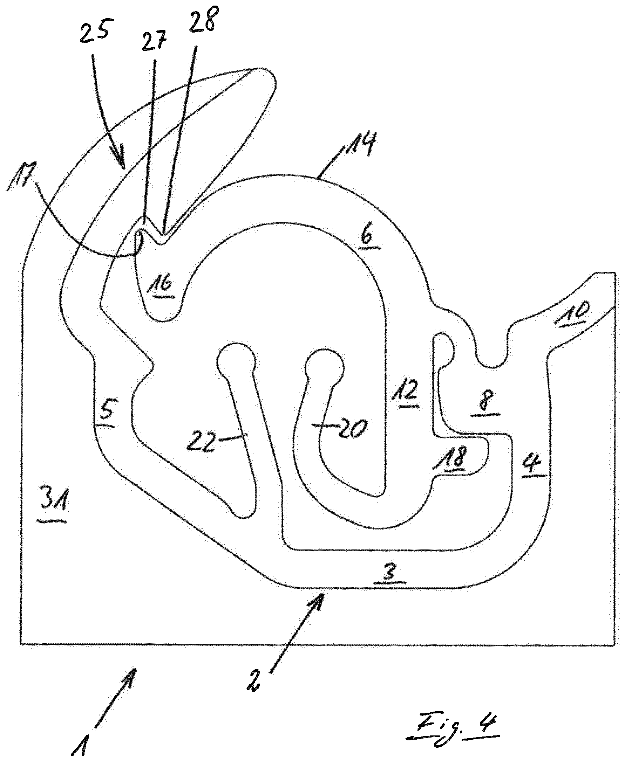

- Figur 4: die Halterung nach Figur 3 in einer Seitenansicht;
- Figur 5: eine Seitenansicht der geschlossenen Halterung mit einem darin angeordneten langgestreckten Körper;
- Figur 6: die Halterung nach Figur 5 mit einem Durchmesser stärkeren langgestreckten Körper in geschlossenem Zustand.

Die erfindungsgemäße Halterung 1 für langgestreckte Körper, wie Leitungen, Kabel und dergleichen besitzt einen wannenartigen Grundkörper mit einer Basiswandung 3 und einer davon abgehenden Seitenwandung 4 und eine zweite Seitenwandung 5.

An der ersten Seitenwandung 4 ist ein schwenkbares Verschlussteil angelenkt, welches an einem freien Ende einen nach außen weisenden Rasthaken aufweist.

An der gegenüberliegenden Seitenwandung 5 ist ein Verriegelungsteil mit einem Gegenrastmittel für den Rasthaken ausgebildet, so dass beim Verschwenken des Verschlussteils, insbesondere um 90°, der nach außen weisende Rasthaken mit dem Rastmittel des Verriegelungsteiles der gegenüberliegenden Wandung in Eingriff gerät. Dies wird näher erläutert.

An der ersten Seitenwandung 4 ist beabstandet zur Basiswandung 3 ein Verschlussteil 6 mit einem Scharnier angelenkt, wobei das Scharnier 7 an einer Innenseite der ersten Seitenwandung 4 angeordnet ist.

Insbesondere ist an der Innenfläche der ersten Seitenwandung 4, beabstandet zur Basiswandung 3, eine sich parallel zur Basiswandung 3 erstreckende und von dieser beabstandete Scharnierpodestleiste 8 angeordnet. Auf der Scharnierpodestleiste 8 ist beabstandet zur Seitenwandung 4 auf einer der Basiswandung 3 gegenüberliegenden Wandung 9 ein sich im Wesentlichen in gleicher Richtung wie die Seitenwandung 4 erstreckendes Filmscharnier 7 angeordnet.

An dem Filmscharnier 7 ist das Verschlussteil 6 angeordnet.

Um ein Verschwenken des Verschlussteils 6 nach außen zu begrenzen, erstreckt sich ein Anschlag 10 der Seitenwandung 4 ein Stück schräg nach außen und endet mit einem freien Ende 11 der Seitenwandung 4.

Das Verschlussteil 6 besitzt einen ebenen Wandungsabschnitt 12, der sich vom Filmscharnier 7 zur zweiten Seitenwandung 5 hin erstreckt und in der Ausgangsstellung der Halterung in etwa parallel zur Basiswandung 3 verläuft.

Zur ersten Seitenwandung 4 hin und zum Anschlag 10 hin erstreckt sich eine halbkreisförmig gewölbte Bogenwandung 14, deren freies Ende 15 folgerichtig zur gegenüberliegenden zweiten Seitenwandung 5 hin gerichtet ist. An der Außenseite der Bogenwandung 14 ist im Endbereich ein nach außen und oben weisender Rasthaken 16 ausgebildet. Die Rastkante 17 des Rasthakens 16 ist dem freien Ende 15 somit diametral gegenüberliegend an der Bogenwandung 14 angeordnet.

Beabstandet vom Filmscharnier 7 ist unterseitig an dem ebenen Wandungsabschnitt 12 eine Begrenzungsleiste 18 ausgebildet. Die Scharnierpodestleiste 8 ist korrespondierend zu der Begrenzungsleiste 18 ausgebildet um in ungünstigen Lastfällen das Film-Scharnier entsprechend zu unterstützen, um einen gewissen Anteil von angreifenden Kräften aufzunehmen.

Der ebene Wandungsabschnitt 12, der sich vom Filmscharnier zur zweiten Seitenwandung hin erstreckt, dient als Verschwenk- oder Betätigungshebel zur Verschwenkung des Verschlussteiles 6.

An einer der Bogenwandung 14 gegenüberliegenden Längskante bzw. einem Längskantenbereich 19 des ebenen Wandungsabschnitts 12 ist eine erste federnde Leiste 20 angeordnet. Die federnde Leiste erstreckt sich dabei ein Stück vom ebenen Wandungsabschnitt weg und ist dann zur Bogenwandung hin und zum ebenen Wandungsabschnitt hin gebogen angeordnet, so dass eine freie Längskante 21 der federnden Leiste 20 näher an der Bogenwandung 14 als dem Längskantenabschnitt 19 ist und sich gegenüber dem maximalen Abstand der federnden Leiste in der Wölbung weg vom Längskantenabschnitt 19 zum ebenen Wandungsabschnitt 12 hin orientiert ist.

An der Basiswandung 3 ist eine zweite federnde Leiste 22 angeordnet, welche sich von der Basiswandung 3 leicht schräg nach außen erstreckt und mit einer freien Kante 23 näher zur zweiten Seitenwandung 5 hin orientiert ist als der Ausgangsbereich der zweiten federnden Leiste an der Basiswandung 3.

An der Seitenwandung 5 ist ein Verriegelungsteil 25 angeordnet. Das Verriegelungsteil 25 ragt von außen schräg auf das Verschlussteil 6 zu und besitzt eine freie obere Kante 26. Von der Kante 26 entfernt ist an einer Innenfläche des Verriegelungsteils 25 eine Rastnut 27 eingebracht, welche eine Raststufe 28 bildet. Zwischen der Raststufe 28 und der freien Kante 26 bildet das Verriegelungsteil eine Gleit- und Findungsfläche 29 aus.

Die Seitenwandung 5 kann, wie im dargestellten Beispiel gezeigt, über eine unregelmäßige Form und unterschiedliche Neigungen verfügen.

Dem Fachmann ist jedoch klar, dass die Seitenwandung 5 auch in zur Seitenwandung 4 paralleler Weise sich orthogonal von der Basiswandung 3 weg erstrecken kann. Die Raumform sowohl der Seitenwandungen 4, 5 als auch der Basiswandung 3 sind weitgehend beliebig, solang die Funktionalität des Verschlussteils 6 und des Verriegelungsteils 25 sowie der federnden Leisten 20, 22 gewährleistet ist.

Dies betrifft auch die Anlenkung des Verschlussteils 6 an der Seitenwandung. Der Fachmann versteht, dass die Anlenkung solange in einer beliebigen Weise ausgeführt werden kann, wie eine Verschwenkung des Verschlussteils 6 um etwa 90° in den wannenartigen Grundkörper 2 der Halterung 1 ermöglicht ist.

Die Ausführung mit zwei federnden Leisten ist optional. Zur Ausführung der Erfindung ist eine federnde Leiste 20, 22, ggf. ausreichend, wobei die eine federnde Leiste an der Basiswandung 3 oder dem ebenen Wandungsabschnitt 12 oder der zweiten Seitenwand 5 angeordnet sein kann.

Darüber hinaus kann die jeweils eine federnde Leiste sich mit divergierenden Endbereichen teilen, sodass die federnde Leiste im Querschnitt, beispielsweise y-förmig, ausgebildet ist. Eine solche einzelne federnde Leiste kann ebenfalls an der Basiswandung 3 oder dem ebenen Wandungsabschnitt 12 ausgebildet sein.

Darüber hinaus können am Verriegelungsteil 25 auch eine Mehrzahl von aufeinanderfolgenden Raststufen 28 angeordnet sein, um noch flexibler auf unterschiedliche Durchmesser von langgestreckten Körpern reagieren zu können.

Die exakte Ausführung des Rasthakens 16 einerseits und der Nut 27 und damit der Raststufe 28 ist ebenfalls solange beliebig, wie Rasthaken 16 und Raststufe 18 korrespondierend wirken und miteinander in Eingriff bringbar sind.

Insbesondere können die Nut 27 und damit die Raststufe 28 einerseits als auch der Rasthaken 16 von seiner Rasthakenkante 17 andererseits ausgehend mit einem Hinterschnitt ausgebildet sein, welcher das Herausrutschen der Rasten zusätzlich erschwert.

Die nicht beweglichen Teile, d.h., die nicht für eine Bewegung vorgesehenen Teile der Halterung 1 und zwar die Basiswandung 3, die erste Seitenwandung 4 und die zweite Seitenwandung 5 wirken zur Aussteifung über eine gemeinsame Versteifungsrippe 31, die außenseitig und orthogonal auf der Ebene der jeweiligen Wandung stehend sich nach außen erstreckt und somit für eine Aussteifung sorgt.

Über die Versteifungsrippe 31 oder weitere Anbauteile kann die Halterung 1 auch mit anderen Bauteilen verbunden oder einstückig ausgebildet sein, insbesondere Verbindungsmitteln mit einer Karosserie, einem Gebäude oder dergleichen.

Nachfolgend wird die Funktion dieser Ausführungsform näher erläutert.

Die Kanten 15 des Verschlussteils 6 und die Kante 26 des Verriegelungsteils 25 definieren zwischen sich eine Öffnung für einen aufzunehmenden und zu haltenden, langgestreckten Körper 30.

Wird ein langgestreckter Körper 30 in die Halterung 1 eingebracht, indem er an den freien Kanten 15, 26 vorbeigeführt wird, gerät dieser auf die federnde Leiste 20 oder den als Schwenkhebel dienenden Wandungsabschnitt 12, wobei bei weiterem Druck das Verschlussteil 6 um das Filmscharnier 7 herum verschwenkt wird, so dass der Rasthaken 16 mit seiner Kante 15 voran auf die Kante 26 des Verriegelungsteils verschwenkt wird und die Anschlagleiste 18 auf die Seitenwandung 4 hin. Während der Verschwenkbewegung gerät der Rasthaken 16 mit seiner Außenfläche zwischen den Kanten 15, 17 an die Gleit- und Findungsfläche 29 des Verriegelungsteils 25 und gleitet an dieser solange entlang, bis die Rasthakenkante 17 in den Bereich der Nut 27 und insbesondere der Stufe 28 gelangt. Durch eine Einwärtswölbung der Gleit- und Findungsfläche 29 wird hierbei der Rasthaken 16 auch auf die ebene Wandung 12 zu verbogen und federt dann mit seiner Kante 17 in die Nut 27 hinein und/oder das Verriegelungsteil 25 biegt sich zusätzlich etwas nach außen weg, was den gleichen Effekt bewirkt. In diesem Zustand liegt die Anschlagleiste 18 unterhalb der Scharnierpodestleiste 8 an dieser oder/und an der ersten Seitenwandung 4 an.

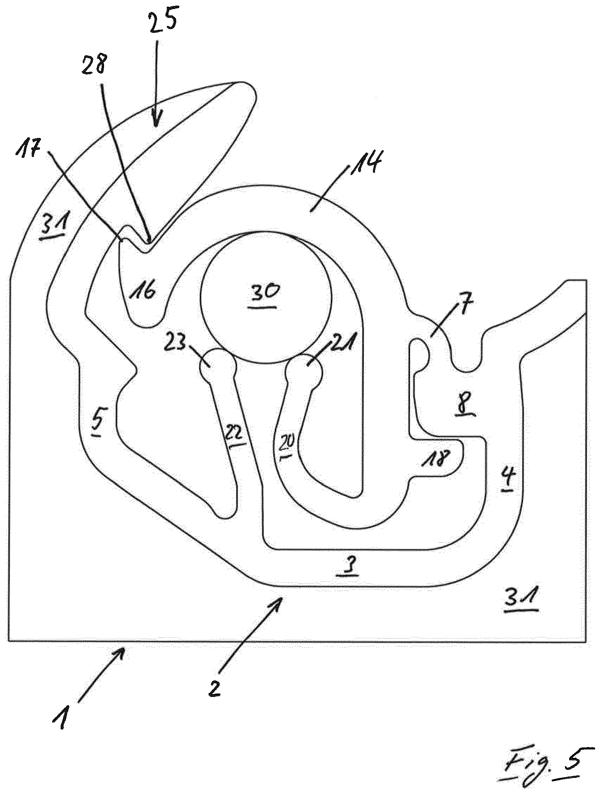

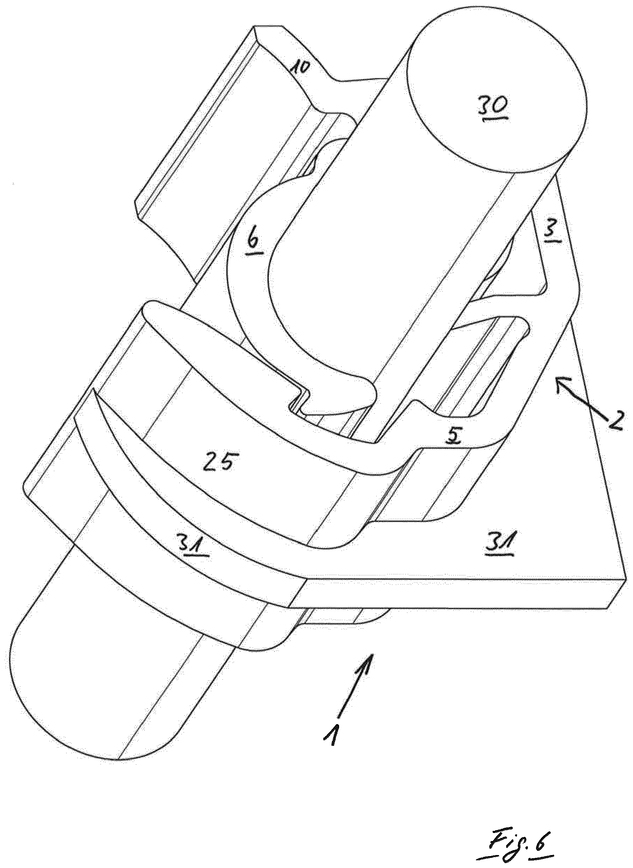

Gegebenenfalls liegt auch der ebene Wandungsabschnitt 12 an der Scharnierpodestleiste 8 an. In diesem Zustand dient die Bogenwandung 14 als oberseitige Abdeckung eines nun geschlossenen Innenraums, der durch den Grundkörper 2 und die Bogenwandung 14 begrenzt wird. Die erste federnde Leiste und die zweite federnde Leiste weisen mit ihren freien Kanten 21, 23 hierbei in Richtung der Bogenwandung 14, wobei die freien Kanten 21, 23, bzw. die erste federnde Leiste und die zweite federnde Leiste voneinander divergieren. Dies ermöglicht, dass die erste federnde Leiste 20 und die zweite federnde Leiste 22 abhängig vom Durchmesser eines langgestreckten Körpers in Richtung auf den ebenen Wandungsabschnitt 12 zu federn können (im Falle der ersten federnden Leiste) und auf die Seitenwandung 5 zu federn können (im Falle der zweiten federnden Leiste 22). Die freien Kanten 21, 23 der beiden federnden Leisten 20, 22 (Figur 5) wirken somit elastisch drückend auf einen langgestreckten Körper 30, so dass dieser an die Bogenwandung 14 gedrückt wird und gleichzeitig der Rasthaken 16 in die Nut 27 gedrückt wird (Figuren 5, 6).

Dies ermöglicht einerseits eine sehr leichte und unkomplizierte Montage eines langgestreckten Körpers 30 in der Halterung 1, zudem kann über die beiden federnden Leisten eine sichere, spielfreie Festlegung des langgestreckten Körpers 30 in der Halterung erzielt werden und zudem wirkt die von den federnden Leisten 20, 22 ausgeübte Kraft auf den langgestreckten Körper 30 und damit mittelbar auf die Bogenwandung 14 einer Lösung des Rasteingriffs zwischen dem Rasthaken 16 und der Nut 27 entgegen. Somit wird eine einfache, sicher funktionierende, zuverlässige und langlebige Halterung für einen langgestreckten Körper 30 geschaffen.

Die beiden federnden Leisten bewirken durch die wirkende Vorspannung einen Gewissen Widerstand durch Reibung gegen axiale Verschiebung entlang der Leitungsrichtung - den Punkt nach Möglichkeit noch in die erklärenden Ausführungen integrieren.

Die federnden Leisten 20, 22 bewirken durch die Vorspannung mit der sie auf einen längsgestreckten Körper so wirken auch einen hohen Widerstand aufgrund von Reibung, sodass zusätzlich ein festlegender Effekt in axiale Richtung als langgestreckten Körper 30 bewirkt wird.

Insbesondere wird eine ungewollte axiale Verschiebung des Körpers 30 verhindert.

### Bezugszeichen

- 1: Halterung
- 2: Grundkörper
- 3: Basiswandung
- 4: erste Seitenwandung
- 5: zweite Seitenwandung
- 6: Verschlussteil
- 7: Scharnier
- 8: Scharnierpodestleiste
- 9: Wandung von 8
- 10: nach außen erstreckter Wandungsabschnitt
- 11: freies Ende
- 12: ebener Wandungsabschnitt
- 14: Bogenwandung
- 15: freies Ende
- 16: Rasthaken
- 17: Rasthakenkante
- 18: Begrenzungsleiste
- 19: Längskantenabschnitt
- 20: erste federnde Leiste
- 21: freie Kante
- 22: zweite federnde Leiste
- 23: freie Kante
- 25: Verriegelungsteil
- 26: freie Kante
- 27: Nut
- 28: Raststufen
- 29: Gleit- und Findungsfläche
- 30: langgestreckter Körper

## Patentansprüche

1. Halterung für langgestreckte Körper wie Leitungen, Kabel und dergleichen,
wobei die Halterung einen wannenartiger Grundkörper (2) mit einer nicht beweglichen Basiswandung (3) und zwei davon abgehenden nicht beweglichen Seitenwandungen (4, 5) besitzt,
wobei an einer ersten Seitenwandung (4) ein schwenkbares Verschlussteil (6) angelenkt ist und an der zweiten Seitenwandung ein Verriegelungsteil (25) angeordnet ist, wobei das schwenkbare Verschlussteil (6) und das Verriegelungsteil (25) korrespondierende Rastmittel (16,17;27,28) besitzen, welche durch Verschwenken des Verschlussteils (6) in Eingriff bringbar sind,
wobei zur verschwenkenden Betätigung des Verschlussteils (6) eine als Schwenkhebel dienende Wandung (12) vorhanden ist, welche beim Auflegen und Eindrücken eines zu haltenden Gegenstandes das Rastmittel (16) des Verschlussteils (6) zum Rastmittel (27) des Verriegelungsteils (25) verschwenkt und mit diesem in Eingriff bringt, wobei zumindest eine federnde Leiste (20, 22) vorhanden ist, welche sich von dem Grundkörper (2) und/oder der als Schwenkhebel dienenden Wandung (12) im verschlossenen Zustand in Richtung zum haltenden Gegenstand erstreckt, **dadurch gekennzeichnet,**
**dass** die nicht beweglichen Teile der Halterung (1) und zwar die nicht bewegliche Basiswandung (3), die nicht bewegliche erste Seitenwandung (4) und die nicht bewegliche zweite Seitenwandung (5) einschließlich dem daran angeordnetem Verriegelungsteil (25) zur Aussteifung über eine gemeinsame Versteifungsrippe (31) verfügen, die außenseitig und orthogonal auf der Ebene der jeweiligen Wandung (3, 4, 5, 25) stehend sich nach Außen erstreckt und somit für eine Aussteifung sorgt.

2. Halterung nach Anspruch 1, **dadurch gekennzeichnet, dass** sich zumindest eine federnde Leiste von der nicht beweglichen Basiswandung (3) oder der nicht beweglichen zweiten Seitenwand (5) in verschlossenem Zustand in Richtung zum zu haltenden Gegenstand erstreckt.

3. Halterung nach Anspruch 1 oder 2, **dadurch gekennzeichnet, dass** zwei federnde Leisten (20, 22) vorhanden sind, welche mit ihren Endbereichen divergieren um einen zu haltenden Körper an unterschiedlichen Bereichen mit einer elastischen Rückstellkraft zu beaufschlagen oder eine federnde Leiste (20, 22) vorhanden ist, welche sich mit zwei federnden, voneinander divergierenden Endbereichen zu einem zu haltenden Körper (30) erstreckt.

4. Halterung nach einem der Ansprüche 1 bis 3, **dadurch gekennzeichnet, dass** das Verschlussteil (6) die als Schwenkhebel dienende und eben ausgebildete Wandung (12) besitzt und bezogen auf ein Scharnier (7), um das die Verschwenkung erfolgt, gegenüberliegend eine halbkreisförmig gewölbte Bogenwandung (14) vorhanden ist, an deren freien Ende das Rastmittel (16) ausgebildet ist, sodass im geschlossenen Zustand die gewölbte Bogenwandung (14) die Halterung gegenüber der nicht beweglichen Basiswandung (3) abschließt.

5. Halterung nach einem Anspruch 4, **dadurch gekennzeichnet, dass** an der nicht beweglichen Seitenwandung (4) benachbart zur gewölbten Bogenwandung (14) ein freies Ende der Wandung (4) als Anschlag (10) ausgebildet ist, der ein Verbiegen oder Verschwenken des Verschlussteils (6) nach Außen begrenzt.

6. Halterung nach einem der Ansprüche 4 bis 5, **dadurch gekennzeichnet, dass** die federnde Leiste (20) an der ebenen Wandung (12) angeordnet ist, wobei sich die federnde Leiste (20) von einer dem als Filmscharnier ausgebildeten Scharnier (7) gegenüberliegenden Längskante (21) der ebenen Wandung (12) zurückgebogen entlang der ebenen Wandung (12) erstreckt, wobei ein freies Ende (21) der federnden Leiste (20) zur Wandung (12) hin konvergiert.

7. Halterung nach einem der Ansprüche 1 bis 6, **dadurch gekennzeichnet, dass** das Verriegelungsteil (25) von außen schräg auf das Verschlussteil (6) zu ragend angeordnet ist und eine freie obere Kante (26) besitzt, wobei von der Kante (26) entfernt an einer Innenfläche des Verriegelungsteils (20) eine Rastnut (27) angeordnet ist, welche eine Raststufe (28) ausbildet.

8. Halterung nach einem der Ansprüche 4 bis 7, **dadurch gekennzeichnet, dass** an einer Außenseite der Bogenwandung (14) des Verschlussteils (6) im Endbereich ein nach Außen weisender Rasthaken (16) ausgebildet ist, wobei der Rasthaken (16) eine freie Rastkante (17) ausbildet, die einem freien Ende (15) der Bogenwandung (14) gegenüberliegend angeordnet ist, wobei der Rasthaken (16) und dessen freie Kante (17) einerseits und die Nut (27) und die daraus gebildete Raststufe (28) andererseits die korrespondierenden Rastmittel des Verschlussteils (6) und des Verriegelungsteils (25) ausbilden.

9. Halterung nach Anspruch 8, **dadurch gekennzeichnet, dass** der Rasthaken (16) von seiner Rastkante (17) aus und die Raststufe (28) mit einem korrespondierenden Hinterschnitt derart ausgebildet sind, dass die Hinterschnitte bei der Verrastung ineinandergreifen.

10. Halterung nach einem der Ansprüche 7 bis 9, **dadurch gekennzeichnet, dass** zwischen der Raststufe (28) und der freien Kante (26) das Verriegelungsteil (25) eine Gleit- und Findungsfläche (29) für das Aufnehmen und Führen einer Außenfläche des Rasthakens (16) des Verschlussteils (6) bildet.

11. Halterung nach Anspruch 10, **dadurch gekennzeichnet, dass** die Gleit- und Findungsfläche (29) so verläuft bzw. derart angeordnet ist, dass beim Verschwenken des Verschlussteils (6) eine Außenfläche des Rasthakens (16) an der Findungsfläche (29) entlang gleitet, wobei die Findungsfläche (29) einen gewölbten Verlauf derart besitzt, dass das Verschlussteil (6) bzw. die Bogenwandung (14) elastisch gestaucht wird und nach dem Überstreichen der freien Kante (16) der Raststufe (28) in die Nut (27) elastisch hineinfedert und/oder sich das Verriegelungsteil (25) elastisch nach außen bewegt.

12. Halterung nach einem der Ansprüche 4 bis 11, **dadurch gekennzeichnet, dass** an einer der Bogenwandung (14) gegenüberliegenden Fläche der ebenen Wandung (12) des Verschlussteils (6) eine Anschlagleiste (18) vorhanden ist, welche die Verschwenkung des Verschlussteils (6) in den wannenartigen Grundkörper (2) begrenzt.

13. Halterung nach einem der Ansprüche 1 bis 12, **dadurch gekennzeichnet, dass** an einer Innenfläche der ersten Seitenwandung (4) beabstandet zur nicht beweglichen Basiswandung (3) eine sich parallel zur nicht beweglichen Basiswandung (3) erstreckende und von dieser beabstandete Scharnierpodestleiste (8) angeordnet ist, wobei auf der Scharnierpodestleiste (8) beabstandet zur nicht beweglichen Seitenwandung (4) auf einer der nicht beweglichen Basiswandung (3) gegenüberliegenden Wandung (9) das sich im Wesentlichen in gleicher Richtung wie die nicht bewegliche Seitenwandung (4) erstreckendes Filmscharnier (7) zur gelenkigen Anordnung des Verschlussteils (6) angeordnet ist.

14. Halterung nach einem der Ansprüche 1 bis 13, **dadurch gekennzeichnet, dass** an der Halterung ein Verbindungsmittel zum Verbinden mit einer Gebäudewandung, einer Gebäudedecke, einer Karosseriewandung oder anderen festen Einrichtungen eines Fahrzeuges, Luftfahrzeuges oder Gebäudes angeordnet ist.

## Claims

1. A bracket for elongated bodies such as leads, cables, and the like,
wherein the bracket comprises a trough-like base body (2) having a non-moving base wall (3) and two non-moving side walls (4, 5) extending away from the latter,
wherein a pivotable closure part (6) is hinged onto a first side wall (4) and a locking part (25) is arranged on the second side wall, wherein the pivotable closure part (6) and the locking part (25) comprise corresponding latching means (16, 17; 27, 28), which can be brought into engagement with one another by a pivoting of the closure part (6),
wherein a wall (12) serving as a pivot lever for a pivoting actuation of the closure part (6) is given, which, upon placement and pressing in of an object to be held, pivots the latching means (16) of the closure part (6) to the latching means (27) of the locking part (25) and brings the two into engagement, wherein at least one elastic support (20, 22) is given, which, in the closed state, extends from the base body (2) and/or the wall (12) serving as the pivot lever towards the object to be held, **characterized in that**
the non-moving parts of the bracket (1), namely the non-moving base wall (3), the non-moving first side wall (4), and the non-moving second side wall (5), including the locking part (25) arranged thereon, have a common bracing rib (31) for stiffening, which extends outwardly and orthogonally while standing on the plane of the respective wall (3, 4, 5, 25) and thus provides a stiffening.

2. The bracket according to claim 1, **characterized in that**, in a closed state, at least one elastic support extends from the non-moving base wall (3) or the non-moving second side wall (5) towards the object to be held.

3. The bracket according to claim 1 or 2, **characterized in that** two elastic supports (20, 22) are given, which diverge with their end regions in order to impart an elastic return force in various regions on a body to be held, or an elastic panel (20, 22) is given which extends with two elastic, diverging end regions to a body (30) to be held.

4. The bracket according to any one of claims 1 to 3,
**characterized in that** the closure part (6) has the planar wall (12) serving as a pivot lever and, opposite a hinge (7) about which the pivoting occurs, a semi-circularly arched bow wall (14) is given, at whose free end the latching means (16) are configured, such that, in the closed state, the arched bow wall (14) terminates the bracket opposite the non-moving base wall (3).

5. The bracket according to one claim 4,
**characterized in that**, on the non-moving side wall (4) adjacent to the arched bow wall (14), a free end of the wall (4) is configured as a stop (10) that outwardly limits a bending or pivoting of the closure part (6).

6. The bracket according to any one of claims 4 to 5,
**characterized in that** the elastic support (20) is arranged on the planar wall (12), wherein the elastic support (20) extends in a rearwardly bent manner from a longitudinal edge (21) of the planar wall (12) opposite the hinge (7) configured as a film hinge along the planar wall (12), wherein a free end (21) of the elastic support (20) converges towards the wall (12).

7. The bracket according to any one of claims 1 to 6,
**characterized in that** the locking part (25) is arranged so as to project from the outside at an angle towards the closure part (6) and has a free upper edge (26), wherein, on an inner surface of the locking part (20), a latching groove (27) is arranged remotely from the edge (26) and forms a latching step (28) .

8. The bracket according to any one of claims 4 to 7,
**characterized in that**, on an outer side of the bow wall (14) of the closure part (6) in the end region, an outwardly facing latching hook (16) is formed, wherein the latching hook (16) forms a free latching edge (17) that is arranged opposite a free end (15) of the bow wall (14), wherein the latching hook (16) and its free edge (17) on the one hand and the groove (27) and the latching step (28) formed therefrom on the other hand form the corresponding latching means of the closure part (6) and the locking part (25).

9. The bracket according to claim 8, **characterized in that** the latching hook (16) with its latching edge (17) and the latching step (28) are configured with a corresponding undercut such that the undercuts interlock upon latching.

10. The bracket according to any one of claims 7 to 9,
**characterized in that**, between the latching step (28) and the free edge (26), the locking part (25) forms a sliding and finding surface (29) for receiving and guiding an outer face of the latching hook (16) of the closure part (6).

11. The bracket according to claim 10, **characterized in that** the sliding and finding surface (29) extends or is arranged in such a way that, when the closure part (6) is pivoted, an outer surface of the latching hook (16) slides along the finding surface (29), wherein the finding surface (29) has an arched path such that the closure part (6) or bow wall (14) is elastically clinched and, after the free edge (16) of the latching step (28) has been overlain, is elastically deflected into the groove (27), and/or the locking part (25) moves elastically outward.

12. The bracket according to any one of claims 4 to 11,
**characterized in that**, on a surface of the planar wall (12) of the closure part (6) opposite the bow wall (14), a stop support (18) is given, which limits the pivoting of the closure part (6) into the trough-like base body (2).

13. The bracket according to any one of claims 1 to 12,
**characterized in that**, on an inner face of the first side wall (4) and spaced apart from the non-moving base wall (3), a hinge platform support (8) extending parallel to the non-moving base wall (3) and spaced apart from the latter is arranged, wherein, on the hinge platform support (8) and spaced apart from the non-moving side wall (4) on a wall (9) opposite the non-moving base wall (3), the film hinge (7) is arranged, which extends substantially in the same direction as the non-moving side wall (4), for the hinged arrangement of the closure part (6).

14. The bracket according to any one of claims 1 to 13,
**characterized in that** a connection means is arranged on the bracket for connecting to a building wall, a building ceiling, a body wall, or other fixed devices of a vehicle, an aircraft, or a building.

## Revendications

1. Console pour corps allongés tels que fils, câbles et analogues, dans laquelle la console comprend un corps de base en forme de creux (2) ayant une paroi de base non mobile (3) et deux parois latérales non mobiles (4, 5) s'étendant à l'écart de celle-ci, dans laquelle une partie de fermeture pivotante (6) est articulée sur une première paroi latérale (4) et une partie de verrouillage (25) est agencée sur la seconde paroi latérale, dans laquelle la partie de fermeture pivotante (6) et la partie de verrouillage (25) comprennent des moyens d'encliquetage (16, 17 ; 27, 28) correspondants, qui peuvent être amenés en prise l'un avec l'autre par un pivotement de la partie de fermeture (6),
dans laquelle une paroi (12) servant de levier pivotant pour un actionnement pivotant de la partie de fermeture (6) est prévue, qui, lors du placement et de l'enfoncement d'un objet à maintenir, fait pivoter le moyen d'encliquetage (16) de la partie de fermeture (6) par rapport au moyen d'encliquetage (27) de la partie de verrouillage (25) et met les deux en prise, dans laquelle au moins un support élastique (20, 22) est prévu, qui, à l'état fermé, s'étend depuis le corps de base (2) et/ou la paroi (12) servant de levier pivotant vers l'objet à maintenir, **caractérisée en ce que**
les parties non mobiles de la console (1), à savoir la paroi de base non mobile (3), la première paroi latérale non mobile (4) et la seconde paroi latérale non mobile (5), y compris la partie de verrouillage (25) agencée sur celles-ci, ont une nervure de consolidation commune (31) pour le renforcement, qui s'étend vers l'extérieur et de manière orthogonale tout en se tenant sur le plan de la paroi (3, 4, 5, 25) respective et fournit ainsi un renforcement.

2. Console selon la revendication 1, **caractérisée en ce qu'**à l'état fermé, au moins un support élastique s'étend depuis la paroi de base non mobile (3) ou la deuxième paroi latérale non mobile (5) vers l'objet à maintenir.

3. Console selon la revendication 1 ou 2, **caractérisée en ce que** deux supports élastiques (20, 22) sont prévus, qui divergent par leurs régions d'extrémité pour communiquer une force de rappel élastique dans différentes régions sur un corps à maintenir, ou un panneau élastique (20, 22) est prévu, qui s'étend avec deux régions d'extrémité élastiques divergentes vers un corps (30) à maintenir.

4. Console selon l'une quelconque des revendications 1 à 3, **caractérisée en ce que** la partie de fermeture (6) présente la paroi plane (12) servant de levier pivotant et, à l'opposé d'une articulation (7) autour de laquelle s'effectue le pivotement, une paroi d'arc arquée en demi-cercle (14) est prévue, à l'extrémité libre de laquelle sont configurés les moyens d'encliquetage (16), de telle sorte que, à l'état fermé, la paroi d'arc arquée (14) termine la console opposée à la paroi de base non mobile (3).

5. Console selon la revendication 4,
**caractérisée en ce qu'**une extrémité libre de la paroi (4) est configurée, sur la paroi latérale non mobile (4) adjacente à la paroi arquée (14), en tant que butée (10) qui limite vers l'extérieur une courbure ou un pivotement de la partie de fermeture (6).

6. Console selon l'une quelconque des revendications 4 et 5, **caractérisée en ce que** le support élastique (20) est agencé sur la paroi plane (12), dans laquelle le support élastique (20) s'étend de manière recourbée vers l'arrière à partir d'un bord longitudinal (21) de la paroi plane (12) opposé à l'articulation (7) configurée comme une articulation pelliculaire le long de la paroi plane (12), dans laquelle une extrémité libre (21) du support élastique (20) converge vers la paroi (12).

7. Console selon l'une quelconque des revendications 1 à 6, **caractérisée en ce que** la partie de verrouillage (25) est disposée de manière à faire saillie depuis l'extérieur en formant un angle vers la partie de fermeture (6) et présente un bord supérieur libre (26), dans laquelle une rainure d'encliquetage (27) est agencée à distance du bord (26), sur une surface intérieure de la partie de verrouillage (20), et forme un gradin d'encliquetage (28).

8. Console selon l'une quelconque des revendications 4 à 7, **caractérisée en ce que**, sur un côté extérieur de la paroi d'arc (14) de la partie de fermeture (6) dans la région d'extrémité, un crochet d'encliquetage (16) tourné vers l'extérieur est formé, dans laquelle le crochet d'encliquetage (16) forme un bord libre d'encliquetage (17) qui est agencé à l'opposé d'une extrémité libre (15) de la paroi d'arc (14), dans laquelle le crochet d'encliquetage (16) et son bord libre (17) d'une part et la rainure (27) et le gradin d'encliquetage (28) formé à partir de celle-ci d'autre part forment les moyens d'encliquetage correspondants de la partie de fermeture (6) et de la partie de verrouillage (25).

9. Console selon la revendication 8, **caractérisée en ce que** le crochet d'encliquetage (16) avec son bord d'encliquetage (17) et le gradin d'encliquetage (28) sont réalisés avec une contredépouille correspondante de telle sorte que les contredépouilles s'enclenchent lors de l'encliquetage.

10. Console selon l'une quelconque des revendications 7 à 9, **caractérisée en ce que** la partie de verrouillage (25) forme, entre le gradin d'encliquetage (28) et le bord libre (26), une surface de coulissement et de recherche (29) pour recevoir et guider une surface extérieure du crochet d'encliquetage (16) de la partie de fermeture (6).

11. Console selon la revendication 10, **caractérisée en ce que** la surface de coulissement et de recherche (29) s'étend ou est agencée de telle sorte que, lorsque la partie de fermeture (6) est pivotée, une surface extérieure du crochet d'encliquetage (16) coulisse le long de la surface de recherche (29), dans laquelle la surface de recherche (29) a un trajet arqué de telle sorte que la partie de fermeture (6) ou la paroi d'arc (14) est repliée élastiquement et, après que le bord libre (16) du gradin d'encliquetage (28) a été recouvert, est dévié élastiquement dans la rainure (27), et/ou la partie de verrouillage (25) se déplace élastiquement vers l'extérieur.

12. Console selon l'une quelconque des revendications 4 à 11, **caractérisée en ce qu'**un support de butée (18) est prévu, sur une surface de la paroi plane (12) de la partie de fermeture (6) opposée à la paroi d'arc (14), qui limite le pivotement de la partie de fermeture (6) dans le corps de base en forme de creux (2).

13. Console selon l'une quelconque des revendications 1 à 12, **caractérisée en ce que**, sur une face intérieure de la première paroi latérale (4) et espacée de la paroi de base non mobile (3), un support de plateforme articulée (8) s'étendant parallèlement à la paroi de base non mobile (3) et espacé de celle-ci est agencé, dans laquelle, sur le support de plateforme articulée (8) et espacé de la paroi latérale non mobile (4) sur une paroi (9) opposée à la paroi de base non mobile (3), l'articulation pelliculaire (7) est agencée, qui s'étend sensiblement dans la même direction que la paroi latérale non mobile (4), pour l'agencement articulé de la partie de fermeture (6) .

14. Console selon l'une quelconque des revendications 1 à 13, **caractérisée en ce qu'**un moyen de connexion est agencé sur la console pour connecter une paroi de bâtiment, un plafond de bâtiment, une paroi de carrosserie ou d'autres dispositifs fixes d'un véhicule, d'un aéronef ou d'un bâtiment.
